Europäisches Patentamt

European Patent Office

Office européen des brevets

(11) Numéro de publication : **0 384 838 B1**

# (12) FASCICULE DE BREVET EUROPEEN

(45) Date de publication du fascicule du brevet :
**16.09.92 Bulletin 92/38**

(51) Int. Cl.⁵ : **B60Q 1/06, B60Q 1/04**

(21) Numéro de dépôt : **90400482.7**

(22) Date de dépôt : **21.02.90**

(54) **Actionneur, notamment pour la commande d'orientation d'un projecteur.**

(30) Priorité : **23.02.89 FR 8902333**

(43) Date de publication de la demande :
**29.08.90 Bulletin 90/35**

(45) Mention de la délivrance du brevet :
**16.09.92 Bulletin 92/38**

(84) Etats contractants désignés :
**CH DE ES FR GB IT LI**

(56) Documents cités :
**FR-A- 2 479 112**

(73) Titulaire : **VALEO ELECTRONIQUE**
**12-14, Rue Jean Bart**
**F-78390 Voisins-Le-Bretonneux (FR)**

(72) Inventeur : **Cantin, Jean-Pierre**
**12, rue du Clos Guiraud**
**F-91530 Saint-Cheron (FR)**

(74) Mandataire : **Gamonal, Didier et al**
**Société VALEO Service Propriété Industrielle**
**30, rue Blanqui**
**F-93406 Saint-Ouen Cédex (FR)**

# Description

L'invention concerne un actionneur, notamment pour la commande d'orientation d'un projecteur de véhicule automobile, comprenant une tige coulissante actionnée par un moteur électrique réversible par l'intermédiaire d'un dispositif d'engrenage, la position de la tige pouvant en outre être modifiée par un organe de réglage par l'intermédiaire d'un dispositif de transmission.

Un tel actionneur est décrit dans le document EP-A-0 291 379.

Dans celui-ci le dispositif de transmission comporte une pièce menée et une pièce menante avec intervention entre celles-ci d'un limiteur d'effort susceptible d'entrer en action lors d'un réglage manuel à l'aide de l'organe de réglage (une vis) agissant sur une pièce de réglage menée (une bague). La pièce de réglage n'est dentée que sur une portion de sa périphérie et porte une languette élastique destinée à coopérer avec des butées fixes. Grâce à cela une détérioration de l'actionneur n'est pas à craindre même, par exemple, en cas de blocage de la tige car les dents de la pièce de réglage s'échappent du filetage de la vis, en sorte que l'on visse dans le vide.

Lorsque l'on visse en sens inverse, la languette élastique permet un rappel et une remise en service du réglage manuel.

Cette disposition donne satisfaction ; néanmoins, dans certaines applications, il peut être intéressant de ne pas visser dans le vide et d'être tout de suite en prise lorsque l'on tourne l'organe de réglage en sens inverse après intervention du limiteur d'effort.

La présente invention a pour objet de répondre à ces desideratas et donc de créer un actionneur à dispositif de transmission et limiteur d'effort permettant une modification de la position de la tige, dont la course morte est minimale, voire nulle, lorsque l'on tourne l'organe de réglage en sens inverse après mise en action dudit limiteur, tout en procurant d'autres avantages.

Suivant l'invention, un actionneur du type susindiqué est caractérisé en ce que le limiteur d'effort comporte, pour liaison en rotation des pièces menée et menante du dispositif de transmission, des moyens d'engrènement à crans verrouillables sous l'action de moyens élastiques de contrôle d'effort, entre une configuration libre d'engagement, pour laquelle les pièces menée et menante sont en prise avec modification de la position de la tige sous l'action de l'organe de réglage, et une configuration forcée de désengagement, pour laquelle elles peuvent se déplacer l'une par rapport à l'autre en sautant d'un cran à l'autre sous l'action de l'organe de réglage en cas de résistance de la tige, et en ce que les moyens élastique de contrôle d'effort sont tarés en sorte de ne pas perturber le fonctionnement de la tige lorsque celle-ci est actionnée par le moteur.

Grâce à l'invention les pièces menée et menante sont tout de suite en prise lorsque l'on actionne l'organe de réglage en sens inverse, après intervention du limiteur, et les crans ne risquent pas d'être déverrouillés lorsque le moteur entraîne la tige.

En outre, en configuration forcée de désengagement (ou de débrayage), le mouvement de rotation entre les pièces menée et menante n'est pas limité, en sorte que cette disposition favorise le calage initial d'un projecteur à l'aide d'un robot.

De plus, le passage d'un cran à un autre permet d'avertir l'opérateur.

On appréciera les grandes possibilités d'implantation du limiteur d'effort, celui-ci pouvant par exemple être implanté entre l'organe de réglage et la pièce de réglage, ou entre la pièce de réglage et la tige.

Les moyens d'engrènement peuvent être rigides, dans ce cas l'une des parties de ceux-ci peut être mobile axialement à l'encontre des moyens élastiques de contrôle d'efforts.

En variante, une partie des moyens d'engrènement peut être élastiquement déformable radialement, les moyens élastiques de contrôle d'effort pouvant être incorporés à cette partie.

La tige présentant une portion d'entraînement pour coopération avec l'élément de sortie du dispositif d'engrenge ainsi qu'une extrémité libre, suivant une caractéristique importante de l'invention ladite portion d'entraînement est disposée axialement entre ladite extrémité libre et l'organe de réglage.

Grâce à cette disposition, le limiteur d'effort peut comporter des bras axiaux déformables d'une grande longeur et les moyens d'engrènement peuvent être constitués par des pignons coniques.

On appréciera également que la portion d'entraînement est mieux soutenue.

La description qui va suivre illustre l'invention à titre d'exemple, en référence aux dessins annexés dans lesquels :
– la figure 1 est une vue schématique en plan, partiellement en coupe, d'une partie d'un actionneur, selon un premier exemple de réalisation de l'invention ;
– la figure 2 est une vue en coupe selon la ligne II-II de la figure 1 ;
– la figure 3 est une vue schématique de l'actionneur selon la ligne III-III de la figure 1 ;
– la figure 4 est une vue partielle analogue à la figure 1 pour une autre variante ;
– la figure 5 est une vue en coupe selon la ligne IV-IV de la figure 4 ;
– la figure 6 est une vue analogue à la figure 1 pour une autre variante de réalisation ;
– la figure 7 est une vue selon la ligne VII-VII de la figure 6 ;
– la figure 8 est une vue analogue à la figure 6 pour encore une deuxième variante ;
– la figure 9 est une vue analogue à la figure 6 pour une troisième variante.

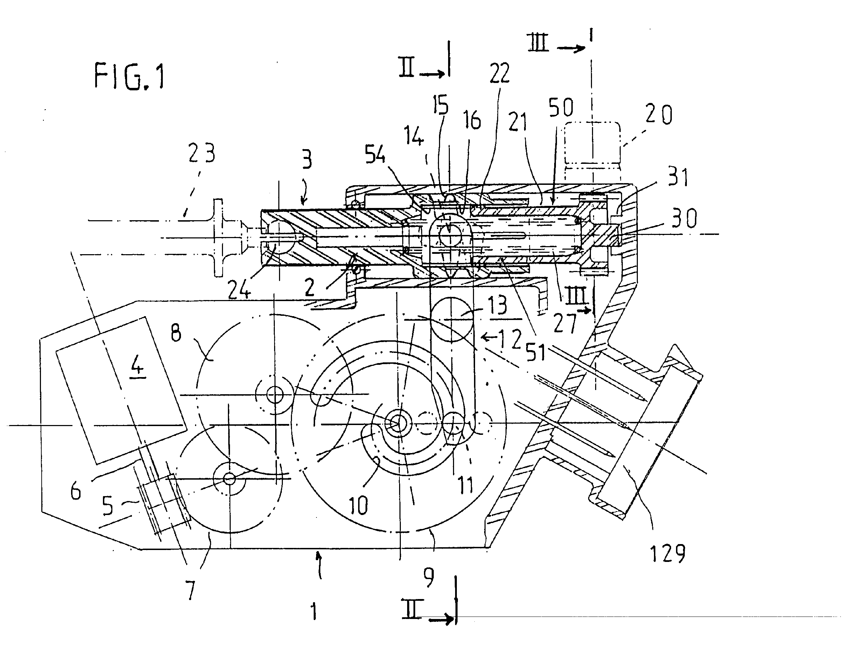

L'actionneur, pour la commande d'orientation d'un projecteur de véhicule automobile, représenté à la figure 1, comprend un boîtier 1 muni d'une ouverture 2 à travers de laquelle coulisse à étanchéité une tige de commande 3. Le boîtier 1, en deux demi-coquilles, contient et porte un moteur électrique 4 réversible, entraînant par une vis sans fin 5, solidaire de son arbre de sortie 6, des pignons 7,8,9 appartenant à un dispositif d'engrenage irréversible doté également d'un levier 12. Plus précisément, le dernier pignon 9 comporte sur une face une rainure de manoeuvre 10 en spirale dans laquelle est logé un téton de manoeuvre 11 solidaire d'une extrémité du levier 12.

Ce levier 12 est articulé entre ses extrémités sur un axe 13 solidaire du boîtier 1 et orthogonal à la tige 3. L'autre extrémité du levier 12 porte un téton d'attaque 14, qui est logé dans une rainure d'attaque hélicoïdale 15 ménagée sur la périphérie extérieure de la tige 3. La portion de la tige 3 portant la rainure 15 sera dénommée ci-après portion d'entraînement.

L'axe 13 est solidaire du boîtier 1 en étant creux et venu de moulage avec l'une des demi-coquilles du boîtier 1, avantageusement en matière plastique, éventuellement chargé de fibres de renforcement, comme le levier 12, les pignons 7,8,9 et la vis 5.

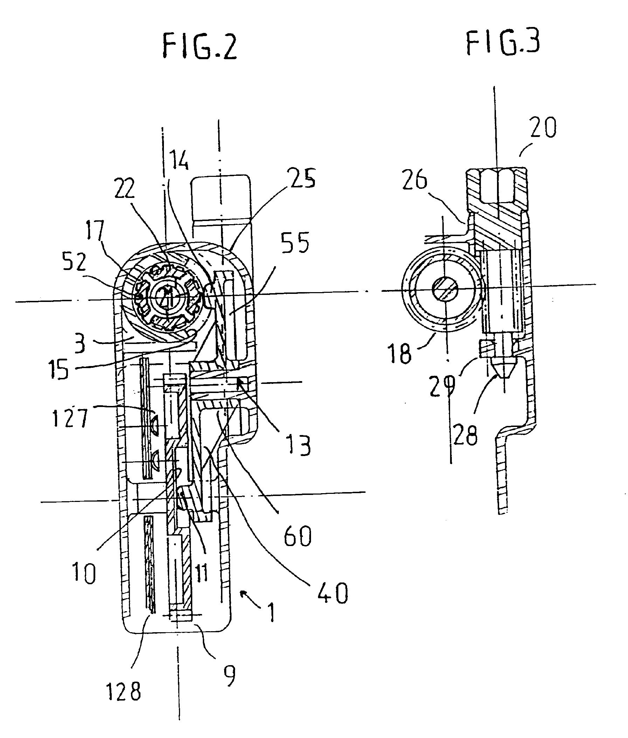

Le levier 12 (figure 2) présente un manchon cylindrique 60 pour engagement sur l'axe 13 épaulé à cet effet. Des flasques nervurés 40,55 sont issus du manchon 60 en étant décalés axialement l'un par rapport à l'autre. Chacun de ceux-ci porte respectivement le téton 11 et le téton 14, qui s'étendent axialement dans le même sens.

Lorsque le moteur 4 est alimenté et tourne dans un sens ou dans l'autre, le levier 12 est manoeuvré par coopération de son téton 11 avec la rainure 10 et attaque par son téton 14 la rainure 15 pour déplacer la tige 3 en translation dans un sens ou dans l'autre suivant le sens de rotation du moteur 4.

Lorsque le moteur 4 n'est pas alimenté, le levier 12 est fixe du fait de l'irréversibilité du système d'entraînement.

La position de la tige 3 peut, en outre, être modifiée par un organe de réglage 20, par l'intermédiaire d'un dispositif de transmission 50, ici irréversible, comportant une pièce menée et menante avec intervention d'un limiteur d'effort 51 susceptible d'intervenir lors du réglage manuel à l'aide dudit organe 20.

Ce dispositif 50 comporte, en outre, une pièce de réglage 18, confondue ou non avec la pièce menée, de manière décrite ci-après, coopérant avec l'organe de réglage 20.

Suivant l'invention, un actionneur du type susindiqué est caractérisé en ce que le limiteur d'effort 51 comporte, pour liaison en rotation des pièces menée 3 et menante 18 du dispositif de transmission 50, des moyens d'engrènement 52 à crans 54 verrouillables sous l'action de moyens élastiques de contrôle d'effort 21,153,253,353 entre une configuration libre d'engagement (ou de débrayage), pour laquelle les pièces menée 3 et menante 18 sont en prise avec modification de la position de la tige 3 sous l'action de l'organe de réglage 20, et une configuration forcée de désengagement pour laquelle elles peuvent se déplacer l'une par rapport à l'autre en sautant d'un cran 54 à l'autre tige sous l'action de l'organe de réglage 20 en cas de résistance de la tige 3, et en ce que les moyens élastiques de contrôle d'effort 21, 153, 253, 353 sont tarés en sorte de ne pas perturber le fonctionnement de la tige 3 lorsque celle-ci est actionnée par le moteur 4.

A la figure 1, l'extrémité droite de la tige 3 comporte un alésage cranté 16 muni de nervures axiales 17 formant en elles des crans 54 sous forme de rainures trapézoïdales. Une roue 18, ici en matière plastique, est munie sur sa périphérie de dents inclinées 19 qui coopérent avec une vis de réglage 20 pour formation d'un système à roue et vis sans fin irréversible ayant une bonne démultiplication.

La roue 18 constitue la pièce menante selon l'invention, la tige 3 la pièce menée et la vis 20 l'organe de réglage.

Pour formation du limiteur d'effort 51, la roue 18 porte des bras axiaux 21, radialement élastiquement déformables, séparés par des fentes, au nombre de quatre ici, qui pénètrent dans l'alésage 16 et portent des bossages 22 coopérant avec les rainures 54 entourant lesdits bossages 22.

Les bossages 22 ont une forme trapézoïdale complémentaire à celle desdites rainures 54, dont le nombre, est ici supérieur à celui des bossages 22 (ici quatre rainures pour un bossage).

Les bossages 22 et les rainures 54 appartiennent aux moyens d'engrènement 52 à crans 54 du limiteur d'effort 51 intervenant entre la pièce 18 et la tige 3 du dispositif 50.

Plus précisément, en configuration libre d'engagement, pièces menée et menante liées en rotation, lorsque la tige 3 est entraînée par le levier 12, les bossages 22 glissent dans les rainures 54 tandis que la roue 18 et la vis 20 restent fixes du fait de l'irréversibilité du dispositif de transmission 50, en sorte que la tige 3 est fixe en rotation et mobile en translation. Les moyens d'engrènement sont verrouillés et ne risquent pas de céder du fait des moyens élastiques de contrôle d'effort comportant les bras 21.

Lorsque le levier 12 est immobilisé par l'arrêt du moteur 4, une rotation de la vis 20 entraîne une rotation de la roue 18, dans un sens ou dans l'autre, et la coopération des bossages 22 avec les crans 54 entraîne une rotation de la tige 3 dans un sens ou dans l'autre. Cette rotation de la tige 3 est transformée en une translation par coopération de la rainure hélicoïdale 15 avec le téton 14 devenu fixe du fait de l'irréversibilité du dispositif d'engrenage.

On peut obtenir ainsi, en configuration libre d'engagement, un réglage manuel fin de la position de la tige 3, pour le calage initial du projecteur commandé par l'actionneur.

En cas de résistance à la translation de la tige 3, par exemple par butée de fin de course, les bras 21 sont repoussés élastiquement vers l'intérieur, pour un effort déterminé, par la poussée des nervures 17 sur les bossages 22, sans que l'actionneur soit endommagé ou désenclenché. Ainsi qu'on l'aura compris, ce sont les bras élastiques 21 qui contrôlent l'effort pour déverrouillage des moyens d'engrènement 52 avec rotation relative de la pièce menée 3 par rapport à la pièce menante 18 sous l'action de l'organe 20.

L'opérateur est averti de cette venue en fin de course grâce aux bossages 22 passant, en configuration forcée de désengagement du limiteur d'effort 51, d'un cran 54 à l'autre. Cette disposition favorise le calage initial du projecteur à l'aide d'un robot du fait qu'une rotation non limitée est ainsi permise en cas de résistance à la translation de la tige 3. Lorsque l'on tourne la vis en sens inverse, la roue 18 est automatiquement en prise par ses bossages 22 avec la tige 3, de sorte que toute course morte est évitée.

La vis fait saillie verticalement par rapport à la paroi sommitale 25 du boîtier en étant engagée dans un fourreau saillant vertical 26. Seule sa tête dépasse et est ici à six pans creux pour un actionnement à l'aide d'un robot. L'extrémité 28 de la vis 20 est épaulée et a une forme pénétrante pour liaison par clipsage avec un retour axial 29 du boîtier 1 (figure 3). L'extrémité libre de la tige est reliée à la pièce 23 à actionner et porte une rotule 24.

Un ressort 27 est interposé entre la roue 18 et la tige 3, ledit ressort permettant au téton 14 d'être en appui constant contre la rainure 15. Ce ressort 27 s'appuie sur le fond des alésages borgnes de la tige 3 et de la roue 18 en étant entouré par les bras 21.

La roue 18 est portée par la tige 3 et est montée tourillonnante dans le boîtier 1 grâce à un téton 30 engagé dans un manchon 31 du boîtier 1. La pièce de réglage 18 est donc mobile en rotation et fixe en translation grâce au ressort 27.

Ainsi qu'on l'aura compris, le levier 12 et les rainures 10,15 permettent de réduire l'épaisseur du boîtier 1 en sorte que celui-ci peut être introduit, à la manière d'une cassette, dans le boîtier du projecteur dans le volume mort existant entre celui-ci et la parabole. Bien entendu, au lieu de tétons 11,14 et de rainures 10,15, on peut utiliser des fourchettes coopérant avec des sailies de formes analogues aux rainures.

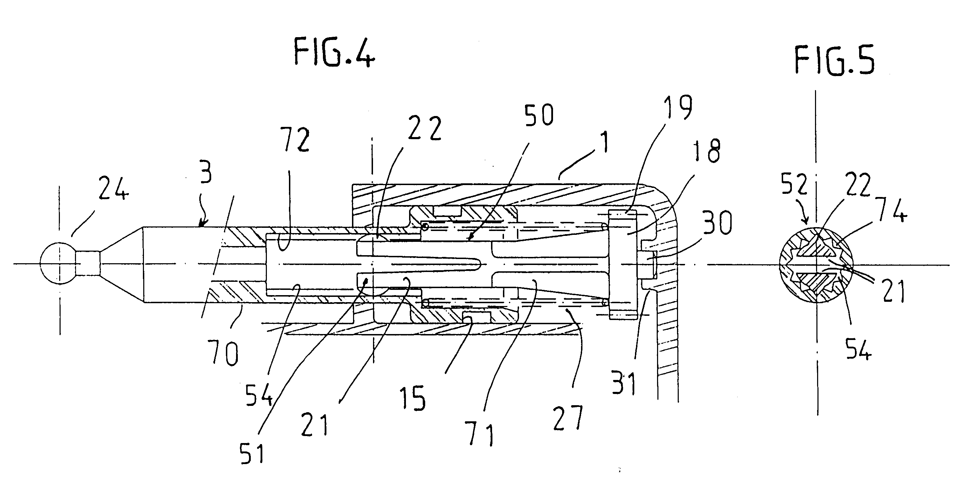

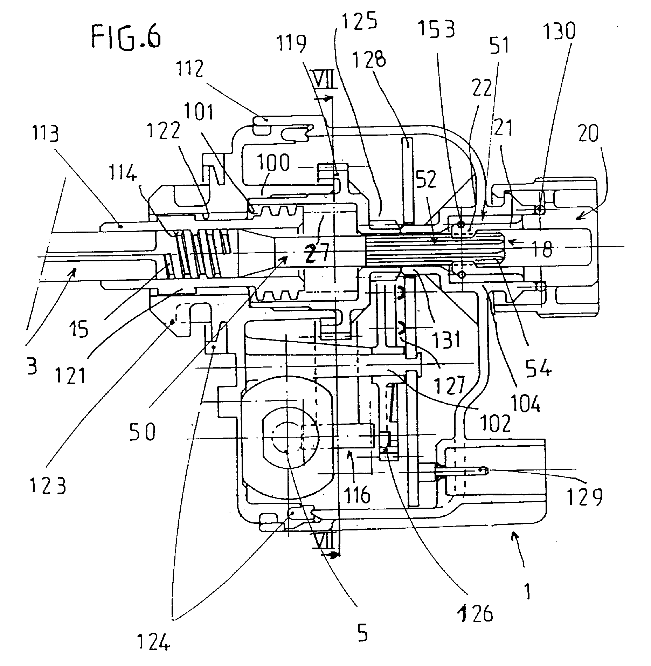

Le nombre de bras 21 peut être réduit à deux et les bossages 22 peuvent être de forme pointue (figures 4 et 5) comme les crans 54 séparés par des dents 74.

Dans ce cas, le ressort 27 entoure les bras 21, qui pénètrent dans un alésage 72 de la partie principale 70 de la tige, lesdits bras 21 appartenant à une portion 71 s'érigeant à partir de la roue 18.

On appréciera que les bras 21 ont une grande longueur, ce qui permet de bien contrôler, comme à la figure 1, la pression de contact des bossages 22 avec les crans 54.

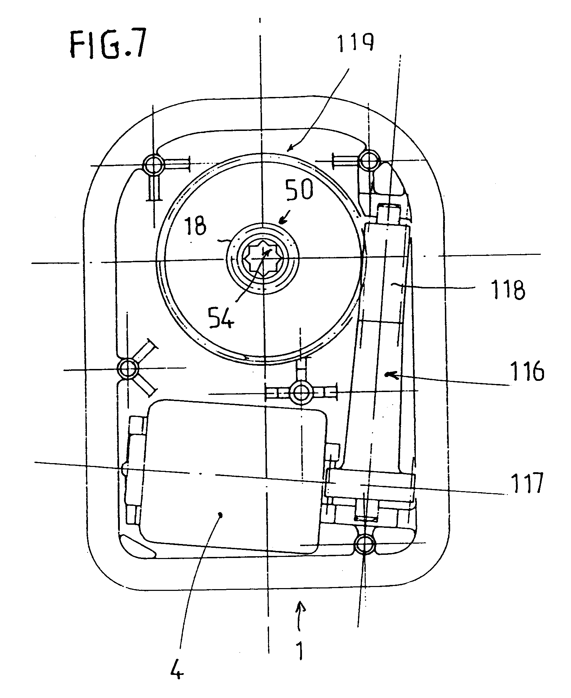

En variante (figures 6 et 7) les bras 21 peuvent entourer lesdits crans 54. Pour régler l'effort on peut avoir recours à un moyen élastique de contrôle d'effort spécifique 153. Ici il s'agit d'un jonc ouvert engagé dans des rainures des extrémités libres des bras 21 formant, avec leurs bossages 22, des mâchoires.

Dans cette variante, la pièce menante est formée par le bouton 20 moleté, ici en matière plastique, et la pièce menée par la pièce de réglage 18 d'un seul tenant avec la tige 3.

L'organe de réglage (le bouton 20) est ici dans l'alignement de la tige 3 nervurée et rainurée.

Le dispositif d'engrenage comporte, pour réduction de l'encombrement radial de l'actionneur, un bloc transversal 116 à roue 117 et vis 118 coopérant, d'une part, avec la vis sans fin 5 et, d'autre part, une roue 119 creuse, le moteur électrique étant disposé radialement en dessous de la roue 119 et le bloc 116 latéralement.

En se reportant à la figure 7 on appréciera que le bloc 116 permet également de ne pas augmenter outre mesure la largeur (ou épaisseur) du boîtier.

On notera également que l'inclinaison du bloc 116 et du moteur par rapport à l'axe de la figure 7 permet une réduction de la largeur de l'actionneur.

Ainsi la hauteur de l'actionneur est réduite car le moteur est disposé globalement horizontalement.

La pièce de réglage 18 est entourée par un manchon axial 131 du boîtier 1.

La tige 3 possède une portion d'entraînement comportant une rainure hélicoïdale 15 coopérant avec une partie filetée 114 d'un alésage interne d'une pièce de guidage, ici une bague 113 creuse. L'extrémité de droite de cette bague 113 est filetée extérieurement pour coopération avec un filetage complémentaire que présente l'alésage interne 120 de la roue 119. L'extrémité libre de la tige s'étend vers la gauche de la figure 6.

Cette bague 113, ici en matière plastique, possède des bossages 121 pour mobilité axiale et liaison en rotation avec le boîtier 1, par coopération avec des rainures axiales 122 d'un nez 123 du boîtier 1. Celui-ci présente en outre (figure 6) un couvercle 112 portant le manchon 131 et coiffant le nez 123 avec intervention de joints surmoulés 124. Le nez 123 présente un manchon 100 coaxial au manchon 131, pour centrage de la partie centrale de la roue 119 entourée par ledit manchon 100.

Lorsque le moteur 4 entraîne le bloc 116, la vis 118 entraîne la roue 119 pour actionnement de la bague 113 et coulissement de la tige 3 avec ses Crans 54, qui se déplacent en translation par rapport aux bras 21.

Lors du réglage initial, la roue 119 étant immobilisée du fait de l'irréversibilité du dispositif d'engrenage due notamment à la vis sans fin 5 et le moteur n'étant pas alimenté, le bouton 20 entraîne la pièce 18 en rotation et la tige 3, dont le mouvement de rotation est transformé en mouvement de translation par la rainure 15 et le filetage 114 coopérant avec le filetage de la roue creuse 119 alors fixe. Le limiteur d'effort 51 est en configuration libre d'engagement, les bras 21 par les bossages 22 étant en prise sous l'action du jonc 153 avec les crans 54.

Les moyens d'engrènement 52 sont ainsi verrouillés.

En cas de résistance à la translation de la tige 3 (configuration forcée de désengagement), le bouton 20 saute de cran à cran, le jonc 153 s'ouvrant et les bossages 22 passant d'un cran à un autre, pour déverrouillage des moyens d'engrènement 52.

Lorsque le moteur entraîne la roue 119 les moyens d'engrènement 52 restent verrouillés du fait du jonc 153 taré en conséquence.

On notera que la roue 119 porte une roue auxiliaire 125 accolée au manchon 131, la roue 119 étant calée axialement par ledit manchon 131 et par un épaulement 101 du nez 123 raccordant le manchon 100 à l'alésage interne présentant les rainures 122 dudit nez. La roue 125 coopère avec une roue 126 portant un curseur à plots 127 en contact avec les pistes d'un circuit imprimé 128 traversé par le manchon 131 et relié à un connecteur 129. (Les mêmes références sont reprises à la figure 1).

Le circuit 128 est monté sur un axe 102 et est fixé sur celui-ci par sertissage. La roue 126 est montée tourillonnante sur ledit axe 102 en étant calée axialement sur celui-ci. Le manchon 131 est prolongé par un manchon 104 à alésage intérieur lisse de plus grand diamètre, cranté à son extrémité libre pour montage du bouton 20 par clipsage avec intervention d'un joint 130 élastique entre le bouton 20 et le manchon 104 rattrapant notamment les jeux. On notera que le bouton 20, avantageusement en matière plastique, possède des pattes élastiquement déformables épaulées pour montage du bouton par clipsage, lesdites pattes étant maintenues en prise par le joint 130.

Le joint 130 est suffisant pour empêcher une rotation du bouton lorsque la tige est mue par le moteur.

Le dispositif de transmission 50 traverse à rotation les roues 125 et 119 centralement ouvertes pour ce faire, le bouton 20 étant disposé à l'arrière du boîtier du côté opposé à l'extrémité libre de la tige 3.

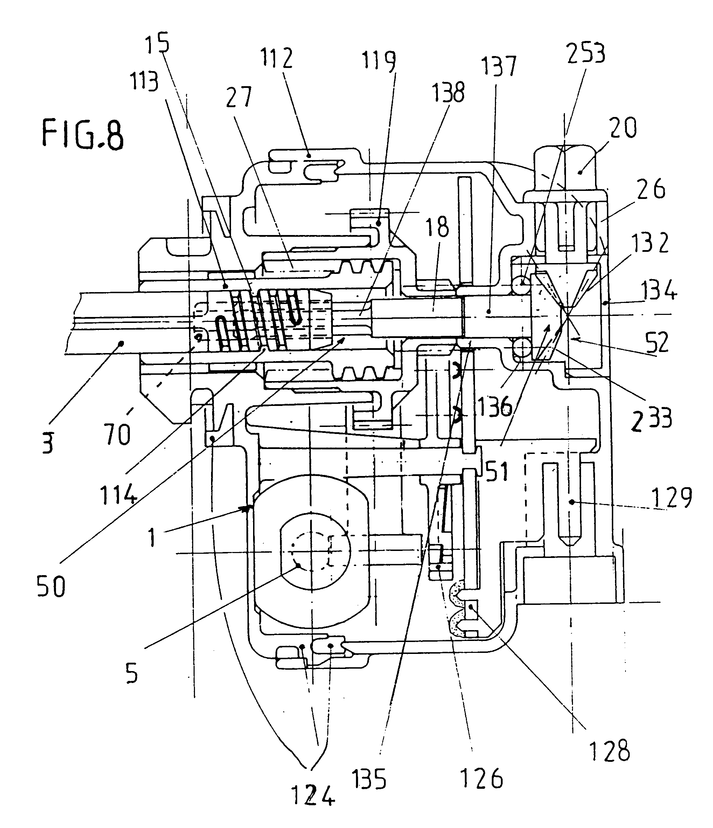

En variante (figures 8), l'organe de réglage (un bouton à 6 pans) s'étend perpendiculairement à la tige 3 et à la pièce 18 présentant un pignon conique 233 pour coopération avec un pignon conique 132 porté par l'extrémité du bouton 20. Ce bouton 20 est monté dans le fourreau 26 avec intervention d'un bouchon 134, évitant la pénétration des poussières.

La pièce 18 est montée tourillonnante, grâce à un axe lisse 137, dans un manchon 135 axial du couvercle 112, avec intervention d'un organe élastique spécifique de contrôle d'effort 253 formant également un joint. Il s'agit ici d'un joint torique prenant appui sur un épaulement, ici du boîtier 1, la paroi transversale 136 de raccordement du manchon 135 au couvercle 112, et sur le pignon conique 233, saillant par rapport à l'axe 137, les pièces 18 et 20 étant perpendiculaires l'une par rapport à l'autre.

Le dispositif d'engrenage est identique à celui des figures 6 et 7, mais ici la pièce 18 est montée télescopiquement à l'intérieur de l'alésage 70 de la tige 3, en étant lié en rotation à celles-ci par coopération mutuelle de méplats 138. Les moyens d'engrènement à crans 52 sont donc ici rigides, et en cas de résistance de la tige, configuration forcée de désengagement, le ressort 253, pour un effort déterminé, est écrasé entraînant une translation de la pièce de réglage 18 à l'intérieur de la tige 3 et un saut de crans. En configuration libre d'engagement, la pièce 18 est mobile en rotation et fixe en translation et entraîne la tige 3 en rotation. La roue 119 étant immobile et les moyens d'engrènement 132,133 verrouillés, la tige 3 se déplacera en translation par rapport à la pièce 18 pour coopération avec le filetage 114.

Lorsque la tige 3 est mue par le moteur la vis ne bouge pas du bout notamment du ressort 253.

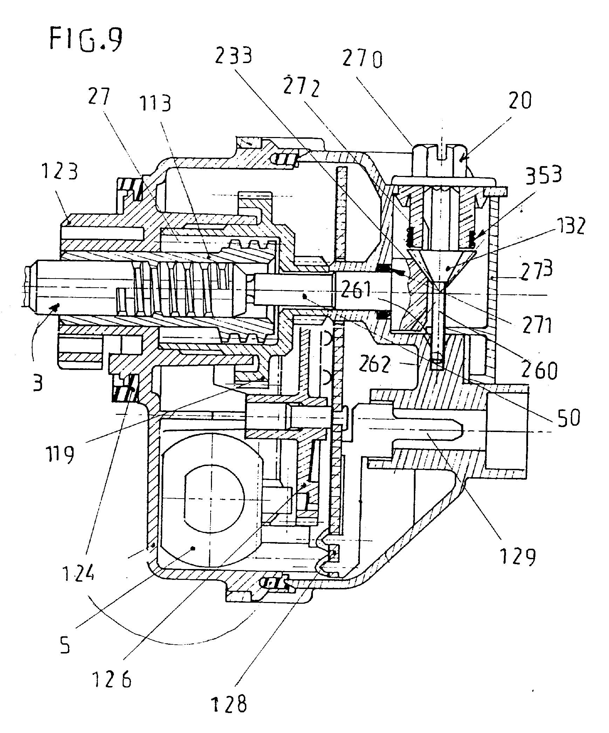

En variante (figure 9) les moyens d'engrènement à crans peuvent intervenir au niveau de l'organe de réglage 20, l'organe de contrôle d'effort 353 étant alors porté par un fourreau 272 et consistant en un jonc doté de plusieurs enroulements.

Dans ce cas un simple joint 271 est interposé entre le pignon 233 et le boîtier.

On notera que le pignon conique 132 présente une tige 260 pour montage tourillonnant dans un logement 261 porté par le boîtier 1, la tige 260 étant dimensionnée pour ne pas interférer avec le pignon 233.

Avantageusement, le connecteur 129 est alors monté horizontalement en sorte que le logement 261 est formé à la faveur d'une saillie 262 du connecteur 129.

On a ainsi une construction robuste.

L'organe 20 consiste ici en une vis 270, solidaire du fourreau 272, qui entraîne le pignon 132 lequel possède des rainures pour coopérer avec des bossages en nombre identique portés par le fourreau 272 doté de bras élastiquement déformables comme à la figure 4, ledit fourreau étant monté par clipsage dans le boîtier 1.

Lorsque la tige 3 est entraînée par le moteur le pignon 132 reste fixe en étant bloqué par le pignon 233.

On notera la présence d'une pièce de fermeture 273 pour cacher les pignons.

Ainsi qu'il ressort à l'évidence de la description et des dessins, le limiteur d'effort est suffisamment raide pour ne pas perturber le fonctionnement de la tige lorsque celle-ci est actionnée par le moteur et dans tous les cas l'effort pour passer d'un cran à un autre, et donc le tarage des moyens élastiques de contrôle d'effort, dépend des applications notamment de la résistance des diverses pièces.

Bien entendu, la présente invention n'est pas limitée aux exemples de réalisation décrits, mais englobe toutes variantes d'exécution. En particulier, les boutons 20 peuvent être métalliques.

Il est possible d'inverser les bossages et les crans, par exemple la tige 3 peut porter les bras 21 et la pièce de réglage les crans 54 et nervures 17. Il en est de même à la figure 6, le bouton portant les crans et la pièce 18 les bossages.

Les moyens élastiques de contrôle d'effort peuvent être à la fois constitués par les bras et par un organe élastique spécifique renforçant l'action de verrouillage des bras. Ledit organe peut consister, à la figure 8, en des rondelles Belleville.

Rien n'empêche de relier le pignon 132, de la figure 8, à une roue actionnée par une vis sans fin, ce qui revient à couper la pièce de réglage en deux.

Pendant l'opération de réglage manuel il est possible de bloquer le moteur pour avoir un dispositif d'engrenage fixe durant cette phase.

Enfin il est possible d'inverser les structures au niveau de la portion d'entraînement comme mentionné ci-dessus, ladite portion présentant dans les figures 1 à 9 une came d'attaque hélicoïdale.

## Revendications

1) Actionneur, notamment pour la commande d'orientation d'un projecteur de véhicule automobile, du type comprenant une tige coulissante (3) actionnée par un moteur électrique (4) par l'intermédiaire d'un dispositif d'engrenage (5,6,7,8,9,12 - 5,6,7,117, 118,119,113), la position de la tige pouvant, en outre, être modifiée par un organe de réglage (20) par l'intermédiaire d'un dispositif de transmission (50), ledit dispositif de transmission (50) comportant une pièce menante (20,18) et menée (18,3) avec intervention entre celles-ci d'un limiteur d'effort (51), caractérisé en ce que le limiteur d'effort (51) comporte, pour une liaison en rotation des pièces menante (20,18) et menée (18,3), des moyens d'engrènement (52) à crans (54) verrouillables sous l'action de moyens élastiques de contrôle d'effort (21,153,253,353), entre une configuration libre d'engagement, pour laquelle les pièces menée et menante sont en prise avec modification de la position de la tige sous l'action de l'organe de réglage (20), et une configuration forcée de désengagement, pour laquelle elles peuvent se déplacer l'une par rapport à l'autre en sautant d'un cran (54) à l'autre sans modification de la position de la tige sous l'action de l'organe de réglage (20) en cas de résistance de la tige (3) et en ce que les moyens élastiques de contrôle d'effort (21,153,253,353) sont tarés pour ne pas perturber le fonctionnement de la tige (3) lorsque celle-ci est actionnée par le moteur.

2) Actionneur selon la revendication 1, caractérisé en ce que la pièce menée est constituée par la tige (3) et la pièce menante par une pièce de réglage (18) coopérant avec l'organe de réglage (20).

3) Actionneur selon la revendication 1, caractérisé en ce que la pièce menante est constituée par l'organe de réglage (20) et la pièce menée par une pièce de réglage (18) coopérant avec l'organe de réglage (20).

4) Actionneur selon l'une quelconque des revendications précédentes, caractérisé en ce que les moyens d'engrènement (52) à crans (54) comportent des bras axiaux (21) séparés par des fentes et portant des bossages (22) coopérant avec des crans (54) séparés par des nervures (17), les crans (54) étant portés par l'une desdites pièces menée et menante et les bossages par l'autre desdites pièces menante et menée.

5) Actionneur selon la revendication 4, caractérisé en ce que les bras (21) sont radialement élastiquement déformables et constituent les moyens élastiques de contrôle d'effort.

6) Actionneur selon la revendication 4, caractérisé en ce que les bras (21) sont ceinturés par un jonc (153) ouvert appartenant aux moyens élastiques de contrôle d'effort.

7) Actionneur selon l'une quelconque des revendications précédentes, caractérisé en ce que les moyens d'engrènement sont constitués par des pignons coniques (132,233) portés respectivement par l'organe de réglage (20) et la pièce de réglage (18) perpendiculaires l'une par rapport à l'autre.

8) Actionneur selon la revendication 7, caractérisé en ce que le pignon (233) de la pièce de réglage est sollicité en direction du pignon (132) du bouton de réglage (20) par un organe élastique de contrôle d'effort (253) prenant appui sur un épaulement (137) du boîtier (1) que présente l'actionneur.

9) Actionneur selon la revendication 4 ou 8, caractérisé en ce que la pièce de réglage (18) est liée en rotation à la tige (3), laquelle est entourée par une pièce de guidage (113) liée en rotation au boîtier (1) de l'actionneur, et en ce que ladite pièce (113) présente un filetage (114) pour coopérer avec une rainure (15) hélicoïdale de la tige (3).

10) Actionneur selon l'une quelconque des revendications précédentes, dans lequel la tige (3) présente une portion d'entraînement (15) ainsi qu'une extrémité (23), caractérisé en ce que la portion d'entraînement (15) est disposée axialement entre ladite extrémité libre (23) et l'organe de réglage (20).

**Patentansprüche**

1) Einrichtung, insbesondere zur Steuerung der Neigung eines Kraftfahrzeug-Scheinwerfers, enthaltend eine Gleitstange (3), die durch einen Elektromotor (4) über eine Eingriffsvorrichtung (5, 6, 7, 8, 9, 12 - 5, 6, 7, 117, 118, 119, 113) betätigt wird, wobei sich die Stellung der Stange außerdem durch ein Regelorgan (20) über eine Übertragungsvorrichtung (50) verändern läßt, während die genannte Übertragungsvorrichtung (50) ein Antriebselement (20, 18) und ein angetriebenes Element (18, 3) aufweist, zwischen denen ein Kraftbegrenzer (51) eingesetzt ist, **dadurch gekennzeichnet**, daß der Kraftbegrenzer (51) für eine Drehverbindung zwischen dem Antriebselement (20, 18) und dem angetriebenen Element (18, 3) Eingriffsmittel (52) mit Einkerbungen (54) aufweist, die unter Einwirkung elastischer Kraftkontrollmittel (21, 153, 253, 353) verriegelbar sind, und zwar zwischen einer freien Eingriffskonfiguration, bei der das angetriebene Element und das Antriebselement unter Veränderung der Lage der Stange unter Einwirkung des Regelorgans (20) in Eingriff stehen, und einer zwangläufigen Ausrückkonfiguration, bei der sie im Verhältnis zueinander verschoben werden können und aus einer Einkerbung (54) in die andere überspringen, ohne die Lage der Stange unter Einwirkung des Regelorgans (20) im Falle eines Widerstandes seitens der Stange (3) zu verändern, und daß die elastischen Kraftkontrollmittel (21, 153, 253, 353) so geeicht sind, daß sie die Funktion der Stange (3) nicht stören, wenn diese vom Motor betätigt wird.

2) Steuereinrichtung nach Anspruch 1, **dadurch gekennzeichnet**, daß das angetriebene Element aus der Stange (3) und das Antriebselement aus einem mit dem Regelorgan zusammenwirkenden Regelelement (18) besteht.

3) Steuereinrichtung nach Anspruch 1, **dadurch gekennzeichnet**, daß das Antriebselement aus dem Regelorgan (20) und das angetriebene Element aus einem Regelelement (18) besteht, welches mit dem Regelorgan (20) zusammenwirkt.

4) Steuereinrichtung nach einem der vorherigen Ansprüche, **dadurch gekennzeichnet**, daß die Eingriffsmittel (52) mit Einkerbungen (54) axiale Arme (21) aufweisen, die durch Schlitze voneinander getrennt sind und Vorsprünge (22) tragen, die mit Einkerbungen (54) zusammenwirken, welche durch Rippen (17) voneinander getrennt sind, wobei die Einkerbungen (54) auf einem der genannten angetriebenen Elemente und Antriebselemente und die Vorsprünge auf dem anderen der genannten Antriebs- und angetriebenen Elemente aufliegen.

5) Steuereinrichtung nach Anspruch 4, **dadurch gekennzeichnet**, daß die Arme (21) in radialer Richtung elastisch verformbar sind und elastische Kraftkontrollmittel bilden.

6) Steuereinrichtung nach Anspruch 4, **dadurch gekennzeichnet**, daß die Arme (21) von einem offenen Ring (153) umgeben sind, der zu den elastischen Kraftkontrollmitteln gehört.

7) Steuereinrichtung nach einem der vorherigen Ansprüche, **dadurch gekennzeichnet**, daß die Eingriffsmittel aus konischen Ritzeln (132, 233) bestehen, die jeweils auf dem Regelorgan (20) und dem Regelelement (18), die lotrecht zueinander angeordnet sind, aufliegen.

8) Steuereinrichtung nach Anspruch 4, **dadurch gekennzeichnet**, daß das Ritzel (233) des Regelelements in Richtung des Ritzels (132) des Regelknopfs (20) durch ein elastisches Kraftkontrollorgan (253) beansprucht wird, welches auf einer Schulter (137) des an der Steuereinrichtung vorhandenen Gehäuses (1) aufliegt.

9) Steuereinrichtung nach Anspruch 4 oder 8, **dadurch gekennzeichnet**, daß das Regelelement (18) drehbeweglich mit der Stange (3) verbunden ist, die von einem Führungselement (113) umgeben ist, welches drehbeweglich mit dem Gehäuse (1) der Steuereinrichtung verbunden ist, und daß das genannte Stück (113) ein Gewinde (114) zum Zusammenwirken mit einer spiralförmigen Nut (15) in der Stange (3) aufweist.

10) Steuereinrichtung nach einem der vorherigen Ansprüche, wobei die Stange (3) einen Antriebsteil (15) sowie ein Ende (23) aufweist, **dadurch gekennzeichnet**, daß der Antriebsteil (15) in axialer Richtung zwischen dem genannten freien Ende (23) und dem Regelorgan (20) angeordnet ist.

**Claims**

1. An actuator, in particular for controlling the orientation of a motor vehicle headlamp, of the kind comprising a sliding rod (3) actuated by an electric motor (4) through gearing means (5, 6, 7, 8, 9, 12 - 5, 6, 7, 117, 118, 119, 113), the position of the rod being able to be further altered by means of an adjusting member (20) through a transmission means (50), the said transmission means (50) comprising a driving member (20, 18) and a driven member (18, 3) with a force limiter (51) acting between these latter, characterised in that the force limiter (51) comprises means (52) having projections (54) which are lockable under the action of resilient force-controlling means (21, 153, 253, 353), for coupling the driving member (20, 18) and driven member (18, 3) in rotation meshing between a free engagement configuration in which the driven and driving members are in engagement, with alteration of the position of the rod under the action of the adjusting member (20), and a forced disengagement configuration in which they are able to be displaced with respect to each other by jumping from one projection (54) to another, without alteration of the position of the rod, under the action of the adjusting member (20) in the event of resistance from the rod (3), and in that the resilient force-controlling means (21, 153, 253, 353) are so calibrated as not to disturb operation of the rod (3) when the latter is actuated by the motor.

2. An actuator according to Claim 1, characterised in that the driven member comprises the rod (3), while the driving member comprises an adjusting element (18) cooperating with the adjusting member (20).

3. An actuator according to Claim 1, characterised in that the driving member comprises the adjusting member (20), while the driven member comprises an adjusting element (18) cooperating with the adjusting member (20).

4. An actuator according to any one of the preceding Claims, characterised in that the meshing means (52), with its projections (54), includes axial arms (21) separated by slots and carrying bosses (22) cooperating with projections (54) which are separated by ribs (17), the projections (54) being carried by one of the said driven and driving members while the bosses are carried by the other of the said driving and driven members.

5. An actuator according to Claim 4, characterised in that the arms (21) are resiliently deformable radially, and constitute the resilient force-controlling means.

6. An actuator according to Claim 4, characterised in that the arms (21) are embraced by an open ring (153) constituting part of the resilient force-controlling means.

7. An actuator according to any one of the preceding Claims, characterised in that the meshing means comprise conical toothed wheels (132, 233) which are carried respectively by the adjusting member (20) and the adjusting element (18), which are arranged at right angles to each other.

8. An actuator according to Claim 7, characterised in that the toothed wheel (233) of the adjusting element is biased towards the toothed wheel (132) of the adjusting button (20) by means of a resilient force-controlling member (253) bearing on a shoulder (137) of the housing (1) of the actuator.

9. An actuator according to Claim 4 or Claim 8, characterised in that the adjusting element (18) is coupled in rotation to the rod (3), which is surrounded by a guide member (133) coupled in rotation to the housing (1) of the actuator, and in that the said member (113) has a thread (114) for cooperation with a helical groove (15) of the rod (3).

10. An actuator according to any one of the preceding Claims, in which the rod (3) includes a driving portion (15) together with an end portion (23), characterised in that the driving portion (15) is disposed axially between the said free end portion (23) and the adjusting member (20).

FIG.1

FIG.2

FIG.3

FIG.4

FIG.5

FIG.6

FIG.7

FIG.8

FIG.9